# EUROPÄISCHE PATENTSCHRIFT

(11) **EP 2 729 779 B1**
(45) Veröffentlichungstag und Bekanntmachung des Hinweises auf die Patenterteilung: **11.03.2015**
(21) Anmeldenummer: 12732948.0
(22) Anmeldetag: 03.07.2012
(51) Int. Cl.: G01L 23/10, G01L 1/18

(54) **VERFAHREN ZUM VERBINDEN EINER MEMBRAN AN EIN SENSORGEHÄUSE**
METHOD FOR CONNECTING A DIAPHRAGM TO A SENSOR HOUSING
PROCÉDÉ POUR RELIER UNE MEMBRANE À UN BOÎTIER DE CAPTEUR

(30) Priorität: 07.07.2011 CH 11382011
(43) Veröffentlichungstag der Anmeldung: 14.05.2014
(73) Patentinhaber: Kistler Holding AG, 8408 Winterthur (CH)
(72) Erfinder: KARST, Dieter, CH-8260 Stein am Rhein (CH); FURTER, Paul, CH-8332 Russikon (CH); BRECHBÜHL, Stefan, CH-8570 Weinfelden (CH)
(86) Internationale Anmeldenummer: PCT/CH2012/000149
(87) Internationale Veröffentlichungsnummer: WO 2013/003965

(56) Entgegenhaltungen:
- CH-A- 394 637
- CH-A1- 702 257
- US-A- 4 597 151

## Beschreibung

### Technisches Gebiet

Die Erfindung betrifft ein Verfahren zum Verbinden einer Membran an ein Gehäuse eines Druck- oder Kraftsensors, wobei im Gehäuse ein Messelement angebracht ist, welches beim Einsatz des fertigen Sensors eine von aussen auf die Membran wirkende Last erfassen kann, und wobei eine Gehäuseringfläche des Gehäuses einer Membranringfläche der Membran gegenüber liegt zum Herstellen einer Verbindung zwischen diesen Flächen.

### Stand der Technik

Druck- und Kraftsensoren werden in vielerlei Varianten angeboten. Je nach vorgesehenen Einsatzgebieten der Sensoren müssen diese den jeweiligen Verhältnissen angepasst werden. Viele Sensoren weisen eine Membran auf, welche am Sensorgehäuse angebracht ist und den Sensor durch diese Verbindung dicht verschliesst. Im Einsatz werden solche Membranen beispielsweise einem Druckraum ausgesetzt. Die durch den Druck generierte Last wirkt auf die Membran und bewirkt schliesslich durch deren Auslenkung ein Signal an einem Messelement, welches im Gehäuse, in Druckrichtung hinter der Membran, angeordnet ist.

Sobald aber die Membran eine Auslenkung erfährt, die nicht auf eine von aussen auf diese wirkende Last zurückzuführen ist, sondern beispielsweise durch eine Thermospannung oder durch eine Verspannung bei der Montage hervorgerufen wird, wird am Messelement ein Fehlsignal erzeugt. Dies kann insbesondere der Fall sein bei frontdichtenden Sensoren. Diese liegen mit dem äusseren Teil der Frontfläche am Bauteil an und dichten dadurch ab. Um montagebedingte Spannungen an der frontseitigen Membran auszuschliessen, werden schulterdichtende Sensoren angeboten. Bei diesen Sensoren ist die gesamte Stirnfront des Sensors der Last, das heisst dem Druckraum oder einer Krafteinwirkung, ausgesetzt. Ein Beispiel eines solchen Sensors ist in der CH 702257 angegeben. Die Membran ist an einer gemeinsamen Fläche zum Gehäuse an diesem angeschweisst.

Im Einsatz wirkt die Last in beiden Fällen auf den mittleren Bereich der Membran, welcher durch die Last ausgelenkt werden soll, sowie, je nach Konstruktion mehr oder weniger, auf den seitlichen Bereich der Membran, den äusseren Rand. Hinter diesem seitlichen Randbereich der Membran, in Druck- oder Kraftrichtung betrachtet, befindet sich bei solchen Sensoraufbauten die Verbindung zwischen Membran und Gehäuse. Um das Messelement unter eine gewisse Vorspannung zu versetzen, ist diese Verbindung bei deren Herstellung oft auf Zug belastet. Im Einsatz wirkt die von aussen auf die Membran aufgebrachte Last diesem Zug entgegen und erzeugt, ab einer gewissen Stärke der Last, einen Druck auf diese Verbindung.

In der CH 394637 ist ein Sensor mit einem vorgespannten Messelement beschrieben, wobei die Vorspannung durch eine das Messelement-umgebende Rohrfeder zustande kommt, die drückseitig eine Bodenplatte aufweist, welche zu einem Druckstempel ausgestaltet ist. Eine Membran ist dem Druckstempel vorgelagert und sowohl mittig mit dem Druckstempel als auch seitlich mit dem Gehäuse durch Ringbuckelschweissungen verbunden.

In der US 4597151 ist Drucksensor beschrieben, dessen gekrümmte Membran sowohl am mittigen Druckstempel als auch an einer seitlichen Stützwand angeschweisst ist. Um asymmetrische Effekte zu vermeiden wird eine zweite Schweissung am inneren Rand der Membranauflage angebracht, nahe beim Beginn der Krümmung.

Beim Einsatz sind gewisse Sensoren starken kurzzeitigen Temperaturschwankungen ausgesetzt, beispielsweise wenn sie in Verbrennungsmotoren mit der stirnseitigen Membran dem Druckraum ausgesetzt sind. Die Membran erwärmt sich dann schnell, die Wärme fliesst anschliessend über die Verbindung von der Membran zum Gehäuse und verteilt sich schliesslich über weitere Verbindungen zu anderen Bauteilen umliegender Komponenten, bis ein Temperaturgleichgewicht hergestellt ist oder bis eine nächste Verbrennung die Temperatur der Membran erneut ansteigen lässt.

Die Temperaturdifferenzen zwischen Membran und Gehäuse führen zu Fehlmessungen am Messelement, die nur schwer zu kontrollieren sind. Der Wärmefluss von der Membran ins Gehäuse hängt massgeblich von der Verbindung zwischen diesen Komponenten ab. Je besser die Verbindung ist, desto mehr Wärme fliesst ab. Problematisch wird es aber, wenn das thermische Verhalten und/oder die Empfindlichkeit der Sensoren gleicher Bauart einer grossen Streuung unterworfen ist. Dann lässt sich das Verhalten eines Sensors einer Bauserie bei starken Temperaturschwankungen nicht abschätzen und somit auch nicht kontrollieren.

Nach dem Stand der Technik wird die Verbindung zwischen Membran und Gehäuse durch eine Schweissung erreicht, indem am gemeinsamen äusseren Rand zwischen Gehäuse und Membran in der Regel eine Laserschweissnaht angebracht wird. Die Verbindungstiefe hängt von den jeweiligen Parametern der Laserapparatur ab, welche allerdings einer schnellen Alterung unterliegt. Dies bedingt eine ständige Überprüfung und Neueinstellung dieser Parameter. Ist die Verbindungstiefe zu tief und erreicht das Innere des Gehäuses, so wird der Sensor durch die Wärmeeindringung beim Schweissen zerstört. Bei einer zu geringen Verbindungstiefe ist die Ankopplung nicht definiert, wodurch die Wärmeleitung von der Membran in das Gehäuse nicht genügend gut gewährleistet ist.

### Darstellung der Erfindung

Es stellt sich nun die Aufgabe der vorliegenden Erfindung, ein Verfahren zur Erstellung einer Verbindung zwischen der Membran und dem Gehäuse eines eingangs erwähnten Kraft- oder Drucksensors anzugeben, das zu einem definierten Verhalten des Sensors bei kurzzeitigen Temperaturschwankungen führt.

Die Aufgabe wird durch die Merkmale des ersten Patentanspruchs gelöst. Weitere vorteilhafte Verfahren sind in den Unteransprüchen beschrieben.

Die der Erfindung zugrundeliegende Idee beruht darauf, dass die Verbindung eine definierte Verbindungstiefe aufweisen soll. Die Verbindungstiefe ist hier definiert durch den gesamten Bereich vom innersten Ende der innersten Verbindung bis zum äussersten Ende der äussersten Verbindung, ungeachtet dessen, ob die Verbindung durchgehend oder unterbrochen ist. Diese Verbindungstiefe soll für alle Sensoren einer Bauart genau vorgeschrieben und reproduzierbar eingehalten werden können.

Untersuchungen haben ergeben, dass Thermospannungen in der Membran und die Auslenkung der Membran das Sensorverhalten wesentlich beeinflussen. Die Thermospannungen und die Auslenkung der Membran hängen letztlich von der Verbindungstiefe dieser Verbindung ab.

Sensoren gleicher Bauart mit derselben Verbindungstiefe der Verbindung zwischen Membran und Gehäuse zeigen gleiches Verhalten bei Aussetzung eines Druckraums, der grossen Temperaturschwankungen unterworfen ist, wie beispielsweise der Brennraum eines Verbrennungsmotors. Ändert sich allerdings die Verbindungstiefe von Sensor zu Sensor, so kann sich die Varianz ihrer Messdaten bei gleichen Verhältnissen massiv erhöhen.

Das erfindungsgemässe Verfahren gewährleistet, dass die Verbindungstiefe definiert ist. Gemäss diesem Verfahren wird zuerst eine erste Verbindung in einem inneren Bereich zwischen der Gehäuseringfläche und der Membranringfläche hergestellt, bis diese Flächen radial ausserhalb dieser ersten Verbindung aneinander anliegen. Anschliessend wird eine zweite Verbindung zwischen der Gehäuseringfläche und der Membranringfläche hergestellt, welche das Gehäuse und die Membran radial ausserhalb der ersten Verbindung bis zum gemeinsamen äusseren Rand miteinander verbindet. Dabei wird eine definierte Verbindungstiefe der gesamten Doppelverbindung eingehalten.

Es hat sich gezeigt, dass die Reproduzierbarkeit der Sensoren nur gewährleistet ist, wenn die Gehäuseringfläche und die Membranringfläche radial ausserhalb der ersten Verbindung spaltfrei aneinander anliegen, bevor die zweite Verbindung zwischen diesen Flächen hergestellt wird.

### Kurze Beschreibung der Zeichnungen

Im Folgenden wird die Erfindung unter Beizug der Zeichnungen näher erklärt. Es zeigen
- Fig. 1: ein Schnitt eines in einer Struktur eingebauten Sensors, einem Druckraum ausgesetzt;
- Fig. 2: ein Schnitt von Sensorkomponenten vor deren Verbindung;
- Fig. 3: ein Schnitt eines Sensors in Bearbeitung nach der ersten Verbindung;
- Fig. 4: ein Schnitt eines Sensors mit beiden Verbindungen;
- Fig. 5a: ein Schnitt von Sensorkomponenten vor deren Verbindung im Bereich der Verbindungsstelle in alternativer Vorrichtung;
- Fig. 5b: ein Schnitt von Sensorkomponenten vor deren Verbindung im Bereich der Verbindungsstelle in einer anderen alternativen Vorrichtung;
- Fig. 6: ein Schnitt eines Sensors in Bearbeitung nach der ersten Verbindung im Bereich der Verbindungsstelle;
- Fig. 7a: ein Schnitt eines Sensors mit beiden Verbindungen im Bereich der Verbindungsstelle;
- Fig. 7b: ein Schnitt eines Sensors mit beiden Verbindungen im Bereich der Verbindungsstelle in alternativer Ausführung.

### Wege zur Ausführung der Erfindung

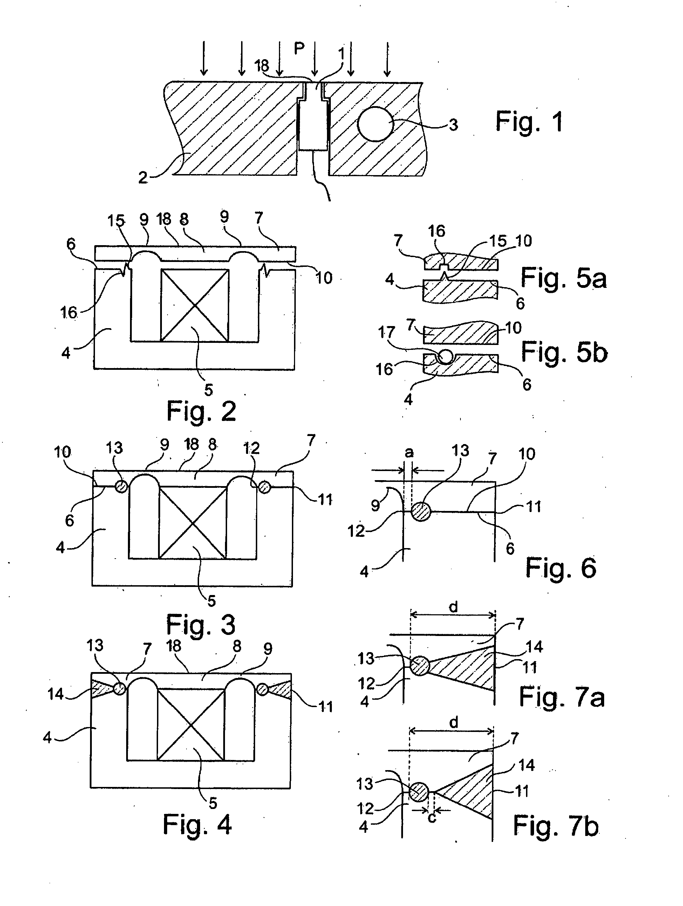

Gleiche Bezugszeichen bezeichnen in allen Figuren stets dieselben Komponenten und Sachverhalte. Die Fig. 1 zeigt einen Schnitt eines in einer Einbaustruktur 2 eingebauten erfindungsgemässen Sensors 1, welcher einem Druckraum P ausgesetzt ist, der beispielsweise der Brennraum eines Verbrennungsmotors sein kann. Der Sensor 1, vorzugsweise ein Drucksensor 1, ist mit seiner gesamten Stirnfront 18 von aussen einer Last ausgesetzt, beispielsweise dem Druckraum P oder einer Kraft. Ein solcher Sensor 1 ist in Fig. 4 schematisch dargestellt. Die Stirnfront 18 wird dabei von der Membran 7 gebildet. Sie umfasst einen mittleren Druckstempel 8, einen ausserhalb des Druckstempels 8 anschliessenden ringförmigen flexiblen Bereich 9 sowie einen ausserhalb an diesen Bereich 9 anschliessenden Membranring, der auf der dem Druck abgewandten Seite eine Membranringfläche 10 aufweist.

Hinter dieser Membran 7 ist das Gehäuse 4 des Sensors 1 angeordnet, welches fest mit der Membran 7 verbunden ist. In diesem befindet sich ein Messelement 5, welches auf Grund der Membranauslenkung ein Signal oder einen Messwert erfasst, welcher auf die von aussen auf die Membran 7 wirkende Last schliessen lässt, also beispielsweise auf den Druck im Druckraum P. Vorzugsweise ist das Messelement 5 ein piezoelektrisches, piezoresistives oder optisches Messelement 5. Beim Einsatz des erfindungsgemässen Sensors 1 ist die Verbindung zwischen Membran 7 und Gehäuse 4 stets auch der Last ausgesetzt, die von der Aussenseite her auf die Membran wirkt. Der erfindungsgemässe Sensor 1 kann als schulterdichtender oder als frontdichtender Sensor 1 ausgestaltet sein.

Die Einbaustruktur 2 kann insbesondere mit Kühlleitungen 3 versehen sein, wie dies beispielsweise bei Motorblöcken von Verbrennungsmotoren üblich ist. Diese Kühlleitungen 3 sind Wärmesenken, weil die Wärme dort schnell abgeleitet werden kann. Bei einer guten Verbindung zwischen dem Gehäuse 4 des Sensor 1 und Einbaustruktur 2 wird die Temperatur des Gehäuses 4 somit ebenfalls gekühlt.

In Fig. 2 ist ein Schnitt von Sensorkomponenten vor deren erfindungsgemässen Verbindung dargestellt. Sie umfassen eine Membran 7 und ein Gehäuse 4 mit darin enthaltenem Messelement 5. Die Membran 7 umfasst den mittig angeordneten Druckstempel 8, der vom flexiblen Bereich 9 umrandet ist. In Druckrichtung abgewandter Seite befindet sich im radial äusseren Bereich, dem Membranring, die Membranringfläche 10, die sich gegenüberliegend von einer Gehäuseringfläche 6 am Gehäuse 4 befindet. Der Sensor 1 ist durch seine Komponenten hier stark vereinfacht dargestellt und beschränkt sich hier auf die Merkmale, die zur Ausführung der Erfindung von Bedeutung sind.

Das erfindungsgemässe Verfahren zum Verbinden einer Membran 7 an ein Gehäuse 4 eines Druck- oder Kraftsensors 1 wird im Folgenden beschrieben. Ein Gehäuse 4. mit einem Messelement 5 und eine Membran 7, wie in Fig. 2 dargestellt, werden derart aneinander gebracht, dass sich Gehäuseringfläche 6 und Membranringfläche 10 gegenüber liegen. Anschliessend wird eine erste Verbindung 13 in einem radial inneren Bereich zwischen der Gehäuseringfläche 6 und der Membranringfläche 10 hergestellt, bis diese Flächen 6, 10 radial ausserhalb dieser ersten Verbindung aneinander anliegen. Fig. 3 zeigt den halbfertigen Sensor 1 nach diesem ersten Vorgang. In Fig. 6 ist der Bereich dieser Verbindung in demselben Zwischenzustand nochmals vergrössert dargestellt.

Die beiden Flächen Gehäuseringfläche 6 und Membranringfläche 10 liegen nun aufeinander auf und bilden einen gemeinsamen äusseren Rand 11 sowie einen gemeinsamen inneren Rand 12. An ihrer Trennlinie befindet sich eine erste Verbindungsstelle 13, welche sich sowohl in die Membran 7 als auch in das Gehäuse 4 erstreckt und welche vom gemeinsamen äusseren Rand 11 beabstandet ist. Vorzugsweise ist die erste Verbindungsstelle 13 auch vom gemeinsamen inneren Rand 12 durch einen Abstand a beabstandet angeordnet. Dadurch wird sichergestellt, dass der Innenraum des Sensors 1 keine übermässige Hitze erleidet bei der Fertigung des Sensors 1, wenn die erste Verbindung eine Verschweissung ist.

Nach dem Anbringen der ersten Verbindung 13 müssen die Membranringfläche 10 und die Gehäuseringfläche 6 flächig und möglichst spaltfrei aneinanderliegen, denn nur so kann gewährleistet werden, dass die Membran 7 nicht in einer Schräglage an das Gehäuse 4 angebracht wird, was zu Fehlverhalten bei späteren Messungen führen würde.

Anschliessend an die erste Verbindung 13 wird radial ausserhalb von dieser eine zweite Verbindung 14 zwischen der Gehäuseringfläche 6 und der Membranringfläche 10 hergestellt, welche das Gehäuse 4 und die Membran 7 bis zum gemeinsamen äusseren Rand 11 miteinander verbindet.

Fig. 4 zeigt den Sensor 1 in diesem fertigen Zustand nach dem Anbringen der zweiten Schweissung 14. In Fig. 7a und 7b sind zwei Ausschnitte dieses fertigen Sensors im Bereich der Verbindungen 13, 14 dargestellt, in zwei verschiedenen Ausführungen. Die Verbindungstiefe d ist in diesen Figuren 4, 7 angegeben als der Bereich, der beide Verbindungsbereiche 13, 14 umfasst. Dabei ist zu beachten, dass sich die beiden Verbindungsbereiche 13, 14 überschneiden können, wie in Fig. 7a dargestellt, dass sie aber auch beabstandet voneinander angebracht werden können, mit einem Abstand c, wie in Fig. 7b dargestellt. In beiden Fällen ist die Verbindungstiefe d dieselbe, da sie den gesamten Bereich der Verbindungsstellen 13, 14 umfasst, inklusive eines allfälligen Abstandes c dazwischen. Erfindungsgemäss wird eine definierte Verbindungstiefe d der gesamten Doppelverbindung 13, 14 stets eingehalten. Zu beachten ist aber, dass die zweite Verbindung 14 nicht tiefer nach innen eindringen darf als die erste Verbindung 13, da sich in diesem Fall die gesamte Verbindungstiefe d verändern würde.

Erfindungsgemäss kann die erste Verbindung 13 eine Lötung, ein Hartlötung, eine Schweissung, eine Widerstandsschweissung, ein Bonden oder ein Thermokompressionsbonden sein. Diese Verfahren erlauben es, eine Verbindung 13 herzustellen, ohne direkten Zugang zur Verbindung zu haben.

Vorzugsweise ist an der Gehäuseringfläche 6 oder an der Membranringfläche 10 ein Buckel 15 angeordnet, an der die erste Verbindung 13 durch Widerstandsschweissung als Ringbuckelschweissung durchgeführt wird. Neben einem solchen Buckel 15 kann vorzugsweise mindestens eine Mulde 16 vorgesehen sein, in welcher sich bei der Verschweissung verschweisstes Material des Buckels 15 ansammeln kann. Dies ist in Fig. 2 und in Fig. 5a dargestellt, wobei in Fig. 5a die Mulde 16 gegenüber dem Buckel 15 angeordnet ist, in Fig. 2 daneben, im selben Bauteil. So wird gewährleistet, dass nach der ersten Verbindung kein überschüssiges Material der ersten Verbindung 13 ein Aneinanderliegen von Gehäuseringfläche 6 und Membranringfläche 10 verhindert. Die hier beschriebenen Buckel 15 und Mulde 16 können jeweils in jeglicher Form ausgestaltet sein, insbesondere rund oder eckig, sowie wahlweise am Gehäuse 4 oder an der Membran 7 angebracht sein. Dargestellt ist jeweils nur eine mögliche Variante, was aber nicht einschränkende Wirkung haben soll.

Alternativ dazu kann, wie in Fig. 5b dargestellt, die erste Verbindung 13 durch Widerstandsschweissung mittels eines Einlegeobjektes 17 durchgeführt wird, welches in einer Mulde 16 eingelegt ist. Dabei kann die Mulde 16 in der Grösse so angepasst sein, dass nach der Verschweissung kein überschüssiges Material hervorsteht.

Die zweite Verbindung 14 kann insbesondere eine Laserschweissung, eine Elektrodenstrahl-Schweissung, eine Schweissung nach dem Argonarc Verfahren, eine Wolfram-Inertgasschweissung (WIG), eine Schutzgasschweissung oder ein Bonden sein.

Diese Verbindungsstelle ist von aussen 11 zugänglich und daher unkritisch, solange die Eindringtiefe nicht über die erste Verbindung hinausgeht und somit den vorgegebenen Wert der bestimmten Eindringtiefe d nicht übersteigt.

Durch dieses Verfahren kann eine Serie gleichartiger Sensoren hergestellt werden, welche Messwerte geringer Streuung liefern, wenn sie im Einsatz stark schwankenden Temperaturen ausgesetzt sind.

### Bezugszeichenliste

- 1: Sensor, Drucksensor
- 2: Einbaustruktur
- 3: Kühlleitung
- 4: Gehäuse
- 5: Messelement
- 6: Gehäuseringfläche
- 7: Membran
- 8: Druckstempel
- 9: Flexibler Bereich
- 10: Membranringfläche
- 11: gemeinsamer äusserer Rand
- 12: gemeinsamer innerer Rand
- 13: Erste Verbindungsstelle
- 14: Zweite Verbindungsstelle
- 15: Buckel
- 16: Mulde
- 17: Einlegeobjekt
- 18: Stirnfront
- P: Druck, Druckraum mit Angebe der Druckrichtung oder Kraftrichtung (Pfeile)
- a: Abstand von der Verbindungsstelle zum inneren gemeinsamen Rand
- c: Abstand zwischen den beiden Verbindungen
- d: Verbindungstiefe der Verbindung vom äusseren Rand her

## Patentansprüche

1. Verfahren zum Verbinden einer Membran (7) an ein Gehäuse (4) eines Druck- oder Kraftsensors (1), wobei im Gehäuse (4) ein Messelement (5) angebracht ist, welches beim Einsatz des fertigen Sensors (1) eine von aussen auf die Membran (7) wirkende Last erfassen kann, und wobei eine Gehäuseringfläche (6) des Gehäuses (4) einer Membranringfläche (10) der Membran (7) gegenüber liegt zum Herstellen einer Verbindung (13, 14) zwischen diesen Flächen (6, 10), welche durch die Last beim Einsatz des Sensors (1) auf Druck belastet wird, **dadurch gekennzeichnet, dass** zuerst eine erste Verbindung (13) in einem inneren Bereich zwischen der Gehäuseringfläche (6) und der Membranringfläche (10) hergestellt wird, bis diese Flächen (6, 10) radial ausserhalb dieser ersten Verbindung aneinander anliegen, und dass anschliessend eine zweite Verbindung (14) zwischen der Gehäuseringfläche (6) und der Membranringfläche (10) hergestellt wird, welche das Gehäuse (4) und die Membran (7) radial ausserhalb der ersten Verbindung (13) bis zum äusseren gemeinsamen Rand (11) miteinander verbindet, wobei eine definierte Verbindungstiefe d der gesamten Doppelverbindung (13, 14) eingehalten wird.

2. Verfahren nach Anspruch 1, **dadurch gekennzeichnet, dass** die Membran (7) des Sensors (1) dazu bestimmt ist, im Einsatz einem Brennraum eines Verbrennungsmotors ausgesetzt zu sein.

3. Verfahren nach Anspruch 1 oder 2, **dadurch gekennzeichnet, dass** sich die Verbindungstiefe d der Verbindung (13, 14) inwendig weniger weit erstreckt als bis zum gemeinsamen inneren Rand (12) von Gehäuseringfläche (6) und Membranringfläche (10).

4. Verfahren nach einem der vorhergehenden Ansprüche, **dadurch gekennzeichnet, dass** die zweite Verbindung (14) nicht tiefer nach innen eindringt als die erste Verbindung (13).

5. Verfahren nach einem der vorhergehenden Ansprüche, **dadurch gekennzeichnet, dass** die zweite Verbindung (14) weniger tief eindringt als bis zur ersten Verbindung (13), sodass ein Abstand c zwischen den beiden Verbindungen (13, 14) verbleibt.

6. Verfahren nach einem der vorhergehenden Ansprüche, **dadurch gekennzeichnet, dass** die erste Verbindung (13) eine Lötung, ein Hartlötung, eine Schweissung, eine Widerstandsschweissung, ein Bonden oder ein Thermokompressionsbonden ist.

7. Verfahren nach einem der vorhergehenden Ansprüche, **dadurch gekennzeichnet, dass** an der Gehäuseringfläche (6) oder an der Membranringfläche (10) ein Buckel (15) angeordnet ist, an der die erste Verbindung (13) durch Widerstandsschweissung als Ringbuckelschweissung durchgeführt wird.

8. Verfahren nach Anspruch 7, **dadurch gekennzeichnet, dass** neben dem Buckel (15) mindestens eine Mulde (16) vorgesehen ist in welcher sich bei der Verschweissung verschweisstes Material des Buckels (15) ansammelt.

9. Verfahren nach einem der vorhergehenden Ansprüche, **dadurch gekennzeichnet, dass** die erste Verbindung (13) durch Widerstandsschweissung (13) mittels eines Einlegeobjektes (17) durchgeführt wird, welches in einer Mulde (16) eingelegt ist.

10. Verfahren nach einem der vorhergehenden Ansprüche, **dadurch gekennzeichnet, dass** die zweite Verbindung (14) eine Laserschweissung, eine Elektrodenstrahl-Schweissung, eine Schweissung nach dem Argonarc Verfahren, eine Wolfram-Inertgasschweissung (WIG), eine Schutzgasschweissung oder ein Bonden ist.

11. Verfahren nach einem der vorhergehenden Ansprüche, **dadurch gekennzeichnet, dass** die Membran (7) mittig einen Druckstempel (8) aufweist, welcher von einer flexiblen Zone (9) umgeben ist, wobei beim Einsatz das Messelement (5) den Druck P oder die Kraft von aussen auf die Membran (7) durch eine Auslenkung des Druckstempels (8) ermittelt.

12. Verfahren nach einem der vorhergehenden Ansprüche, **dadurch gekennzeichnet, dass** das Messelement (5) piezoelektrisch, piezoresistiv oder optisch den Druck oder die Kraft erfassen kann.

## Claims

1. A method for connecting a diaphragm (7) to a housing (4) of a pressure or force sensor (1) wherein a measurement element (5) is positioned in the housing (4), said measurement element (5) being adapted to sense a load acting from the outside onto the diaphragm (7) during the use of the finished sensor, and wherein a housing annular surface (6) of the housing (4) faces a diaphragm annular surface (10) of the diaphragm (7) for establishing a connection (13, 14) between said surfaces (6, 10) which is subjected to a compressive load by the load during use of the sensor (1) **characterized in that** at first a first connection (13) is established in an inner region between the housing annular surface (6) and the diaphragm annular surface (10) until these surfaces (6, 10) rest against each other radially outside of said first connection, and that then a second connection (14) is made between the housing annular surface (6) and the diaphragm annular surface (10) which connects the housing (4) to the diaphragm (7) radially outside of the first connection (13) up to the common outer edge (11) wherein a defined connection depth d of the entire double connection (13, 14) is maintained.

2. The method according to claim 1 **characterized in that**, in use, the diaphragm (7) of the sensor (1) is adapted to be exposed to a combustion chamber of an internal combustion engine.

3. A method according to claim 1 or 2 **characterized in that**, inside, the connection depth d of the connection (13, 14) does not extend as far as to the common inner edge (12) of the housing annular surface (6) and the diaphragm annular surface (10).

4. A method according to any of the preceding claims **characterized in that**, inwardly, the second connection (14) does not penetrate deeper than the first connection (13).

5. A method according to any of the preceding claims **characterized in that** the second connection (14) does not penetrate as deep as to the first connection (13) so that a distance c between the two connections (13, 14) remains.

6. A method according to any of the preceding claims **characterized in that** said first connection (13) is a solder, a braze, a weld, a resistance weld, a bonding, or a thermocompression bonding.

7. A method according to any of the preceding claims **characterized in that** a projection (15) is arranged at the housing annular surface (6) or at the diaphragm annular surface (10) at which the first connection (13) is carried out by resistance welding as a projection weld.

8. The method according to claim 7 **characterized in that** beside the projection (15) at least one recess (16) is provided in which welded material of the projection (15) accumulates in the course of welding.

9. A method according to any of the preceding claims **characterized in that** the first connection (13) is carried out by resistance welding (13) by means of an inserted object (17) which is inserted into a recess (16).

10. A method according to any of the preceding claims **characterized in that** the second connection (14) is a laser weld, an electron beam weld, a weld by the argon arc method, a tungsten inert gas (TIG) weld, an inert gas shielded arc weld, or a bonding.

11. A method according to any of the preceding claims **characterized in that** said diaphragm (7) has a centrally arranged pressure punch (8) surrounded by a flexible zone (9) wherein, in use, the measurement element (5) detects the pressure P or the force from outside onto the diaphragm (7) by a deflection of the pressure punch (8).

12. A method according to any of the preceding claims **characterized in that** said measurement element (5) can detect the pressure or force in a piezoelectric, piezoresistive or optical manner.

## Revendications

1. Un procédé pour le raccordement d'une membrane (7) à un boîtier (4) d'un capteur de pression ou de force (1), dans lequel un élément de mesure (5) est positionné dans ledit boîtier (4), ledit élément de mesure (5) étant apte à détecter une charge exercée de l'extérieur sur la membrane (7) au cours de l'utilisation du capteur fini, et dans lequel une surface annulaire de boîtier (6) du boîtier (4) est placée en face d'une surface annulaire de membrane (10) de la membrane (7) pour établir une connexion (13, 14) entre lesdites surfaces (6, 10) qui est chargée en compression par la charge au cours de l'utilisation du capteur (1), **caractérisé en ce que** d'abord une première connexion (13) est établie dans une zone intérieure entre la surface annulaire de boîtier (6) et la surface annulaire de membrane (10) jusqu'à lesdites surfaces (6, 10) reposent l'une contre l'autre radialement à l'extérieur de ladite première connexion, et **en ce qu'**une deuxième connexion (14) est alors effectuée entre la surface annulaire de boîtier (6) et la surface annulaire de membrane (10) qui relie le boîtier (4) à la membrane (7) radialement à l'extérieur de la première connexion (13) jusqu'au bord extérieur commun (11) tout en maintenant une profondeur de connexion d définie de l'ensemble de la connexion double (13, 14).

2. Le procédé selon la revendication 1, **caractérisé en ce que** la membrane (7) du capteur (1), pendant l'utilisation, est apte à être exposée dans une chambre de combustion d'un moteur à combustion interne.

3. Un procédé selon la revendication 1 ou 2, **caractérisé en ce que** la profondeur de connexion d de la connexion (13, 14) dans l'intérieur ne s'étend pas jusqu'au bord intérieur commun (12) de la surface annulaire de boîtier (6) et la surface annulaire de membrane (10).

4. Un procédé selon l'une quelconque des revendications précédentes, **caractérisé en ce que** la deuxième connexion (14), vers l'intérieur, ne pénètre pas plus profondément que la première connexion (13).

5. Un procédé selon l'une quelconque des revendications précédentes, **caractérisé en ce que** la deuxième connexion (14) ne pénètre aussi profondément qu'à la première connexion (13) en telle sorte qu'un écartement c subsiste entre les deux connexions (13, 14).

6. Un procédé selon l'une quelconque des revendications précédentes **caractérisé en ce que** ladite première connexion (13) est une soudure, une brasure, un soudage, une soudure par résistance, une collage ou une liaison par thermocompression.

7. Un procédé selon l'une quelconque des revendications précédentes **caractérisé en ce qu'**un bossage (15) est disposé à la surface annulaire de boîtier (6) ou la surface annulaire de membrane (10) où la première connexion (13) est établie par soudage par résistance en forme d'une soudure par bossages.

8. Le procédé selon la revendication 7, **caractérisé en ce qu'**à côté du bossage (15) au moins un évidement (16) est fourni dans lequel du matériau soudé du bossage (15) s'accumule lors du soudage.

9. Un procédé selon l'une quelconque des revendications précédentes, **caractérisé en ce que** la première connexion (13) est réalisée par soudage par résistance (13) au moyen d'un objet inséré (17) qui est inséré dans un évidement (16).

10. Un procédé selon l'une quelconque des revendications précédentes, **caractérisé en ce que** la deuxième connexion (14) est une soudure par laser, une soudure par faisceau d'électrons, une soudure par la méthode à arc à l'argon, une soudure à l'arc en atmosphère inerte avec électrode de tungstène (TIG), une soudure sous gaz protecteur ou une collage.

11. Un procédé selon l'une quelconque des revendications précédentes, **caractérisé en ce qu'**au centre de ladite membrane (7) est disposé un piston de pression (8) entouré d'une zone souple (9) dans lequel pendant utilisation, l'élément de mesure (5) détecte la pression P ou la force de l'extérieur sur la membrane (7) par un déplacement dudit piston de pression (8).

12. Un procédé selon l'une quelconque des revendications précédentes, **caractérisé en ce que** ledit élément de mesure (5) peut détecter la pression ou la force de façon piézoélectrique, piezoresistive ou optique.
